(19) Europäisches Patentamt
European Patent Office
Office européen des brevets

(11) **EP 2 886 456 B1**

(12) **FASCICULE DE BREVET EUROPEEN**

(45) Date de publication et mention
de la délivrance du brevet:
**03.05.2017 Bulletin 2017/18**

(51) Int Cl.:
**B64C 27/12** (2006.01)   **B64D 31/00** (2006.01)
**B64D 31/06** (2006.01)   **F02C 6/02** (2006.01)
**F02C 7/32** (2006.01)   **F02C 7/36** (2006.01)
**F02C 9/28** (2006.01)   **F02C 9/42** (2006.01)

(21) Numéro de dépôt: **14004078.3**

(22) Date de dépôt: **03.12.2014**

(54) **Procédé de gestion d'une installation motrice destinée à un aéronef à voilure tournante**

Verfahren zur Führung einer Antriebseinrichtung für einen Drehflügler

Method of managing a propulsion installation for a rotary wing aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2013 FR 1303052**

(43) Date de publication de la demande:
**24.06.2015 Bulletin 2015/26**

(73) Titulaire: **Airbus Helicopters
13725 Marignane Cedex (FR)**

(72) Inventeurs:
• **Borchers, Guido
13007 Marseille (FR)**

• **Stephant, Romain
76600 Le Havre (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**EP-A1- 2 623 746        EP-A1- 2 623 747
EP-A1- 2 623 748        EP-A2- 2 724 939
US-A- 3 963 372         US-A- 4 177 693
US-A1- 2009 186 320**

## Description

La présente invention se situe dans le domaine de la motorisation des aéronefs à voilures tournantes, et plus particulièrement des aéronefs à voilures tournantes équipés de plusieurs moteurs.

La présente divulgation concerne une installation motrice pour un aéronef à voilure tournante et un aéronef à voilure tournante muni de cette installation motrice ainsi qu'un procédé de gestion d'une telle installation motrice.

Une installation motrice pour un aéronef à voilure tournante comprend généralement un ou deux moteurs et une boîte de transmission principale de puissance. Chaque moteur entraine mécaniquement la boîte de transmission principale de puissance afin de mettre en rotation au moins un arbre principal de sortie de la boîte de transmission principale de puissance. Cet arbre principal de sortie est solidaire en rotation avec un rotor principal de l'aéronef à voilure tournante afin d'assurer la sustentation, voire la propulsion de l'aéronef.

Cette boîte de transmission principale de puissance dispose généralement d'arbres secondaires de sortie pouvant par exemple entrainer en rotation un rotor arrière ou bien une ou deux hélices de propulsion par l'intermédiaire d'une boîte de transmission auxiliaire de puissance ainsi qu'un générateur d'énergie électrique et/ou des systèmes hydrauliques. Les fréquences respectives de rotation de ces arbres secondaires de sortie sont généralement différentes de la fréquence de rotation de l'arbre principal de sortie.

Il est à noter que l'on entend par « moteur » une unité motrice entraînant mécaniquement ladite boîte de transmission principale de puissance et, par suite, participant à la sustentation et/ou à la propulsion de l'aéronef à voilure tournante, via le rotor principal. De tels moteurs sont par exemple des turbomoteurs équipant les aéronefs à voilures tournantes.

Un aéronef peut également être équipé d'une unité motrice auxiliaire connue sous l'acronyme *APU* correspondant à la désignation en langue anglaise « Auxiliary Power Unit ». Cette unité motrice auxiliaire peut être par exemple utilisée pour générer de l'énergie électrique ou pour entraîner des systèmes hydrauliques. Par contre, l'unité motrice auxiliaire n'entraîne pas une boîte de transmission principale de puissance, ni un rotor sur un aéronef à voilure tournante.

Par conséquent, l'unité motrice auxiliaire d'un aéronef ne représente pas un moteur au sens de la présente divulgation. Par ailleurs, il est fréquent aujourd'hui d'utiliser sur les aéronefs à voilures tournantes une installation motrice comportant plusieurs moteurs et plus particulièrement deux moteurs, chaque moteur étant piloté par un calculateur dédié. Ces moteurs sont généralement identiques.

On appelle « moteurs identiques » des moteurs ayant des caractéristiques d'entraînement d'un organe rotatif, telles que la fréquence de rotation, la puissance et/ou le couple, identiques.

On connait notamment les documents US4177693 et US3963372 qui décrivent une installation motrice comportant trois moteurs entrainant une boîte de transmission principale de puissance, ces trois moteurs étant identiques. Le document US3963372 propose plus particulièrement une solution de gestion et de contrôle de la puissance de ces trois moteurs.

On connait également le document WO2012/059671 qui propose une installation motrice comportant deux moteurs ayant des puissances maximales disponibles différentes.

Par ailleurs, le document US2009/0186320 décrit un aéronef, muni d'une installation motrice comportant trois moteurs, utilisé dans le cadre de la formation des pilotes et permettant de simuler une panne totale d'un moteur dans différentes configurations de vol. Ce système permet notamment d'adapter la puissance disponible au niveau de l'installation motrice en fonction de la masse totale de l'aéronef.

En outre, le document EP2724939 décrit une installation motrice hybride comportant au moins deux moteurs thermiques et un moteur électrique, le moteur électrique pouvant compenser une perte de puissance d'un moteur thermique consécutivement à une panne de ce moteur thermique.

Enfin, on connait les documents EP2623746, EP2623747 et EP2623748 qui décrivent la détermination d'une marge de puissance d'un moteur en réalisant un contrôle de santé de ce moteur.

Au sein d'une installation motrice, quel que soit le nombre de moteurs qu'elle comporte, chaque turbomoteur peut fonctionner selon un régime dit « régime courant » durant un vol de croisière. Ce régime courant est parfois dénommé « régime maximal continu » et associe une puissance maximale continue *PMC* à une durée d'utilisation illimitée.

De plus, chaque moteur peut également fonctionner selon des régimes spécifiques utilisés durant des phases particulières de fonctionnement de l'aéronef à voilure tournante. Notamment durant la phase de décollage d'un aéronef à voilure tournante, chaque moteur fonctionne selon un « régime de décollage » auquel est associée une puissance maximale au décollage *PMD* pendant une durée d'utilisation restreinte. La puissance maximale au décollage *PMD* est supérieure à la puissance maximale continue *PMC.*

En outre, une installation motrice, lorsqu'elle comporte au moins deux moteurs, est surdimensionnée de manière à assurer la sécurité du vol en cas de panne d'un moteur. En effet, des régimes spécifiques d'urgence sont utilisés par exemple sur les aéronefs bimoteur, lorsque l'un des moteurs est en panne et ne fournit alors aucune puissance. Ces régimes d'urgence sont connus sous l'acronyme *OEI* correspondant à la désignation en langue anglaise « One Engine Inoperative ».

Un premier régime spécifique d'urgence *OEI* 30sec permet alors au moteur restant opérationnel de fonctionner à une puissance de super urgence pendant une durée de l'ordre de trente secondes consécutives.

Un second régime spécifique d'urgence *OEI* 2mn permet également au moteur restant opérationnel de fonctionner à une puissance maximale d'urgence pendant une durée d'utilisation de l'ordre de deux minutes.

Un troisième régime spécifique d'urgence *OEI* continu permet enfin au moteur restant opérationnel de fonctionner à une puissance intermédiaire d'urgence pendant une durée d'utilisation couvrant la fin d'un vol.

Une caractéristique de chaque moteur peut être une puissance mécanique d'urgence *OEI* minimale garantie $POEI_{MINI}$ qui est la puissance minimale que peut fournir ce moteur en mode d'urgence *OEI*. Par suite, les puissances *OEI* associées à chaque régime d'urgence *OEI* 30sec, *OEI* 2mn et *OEI* continu sont supérieures ou égales à une puissance mécanique d'urgence *OEI* minimale garantie $POEI_{MINI}$.

Les puissances mécaniques d'urgence *OEI* développées lors de l'utilisation de ces régimes spécifiques d'urgence sont plus importantes que les puissances développées lors de l'utilisation du régime courant afin de compenser la perte de puissance consécutive à la panne d'un moteur. De fait, la puissance mécanique d'urgence *OEI* minimale garantie $POEI_{MINI}$ est supérieure à la puissance maximale continue *PMC.*

Ainsi, les moteurs doivent être surdimensionnés pour répondre à des exigences de sécurité de manière à fournir ce surcroit de puissance dans les cas de panne d'un moteur. Les moteurs coopèrent alors généralement avec une unité de contrôle connue sous l'acronyme *ECU* pour la désignation en langue anglaise « Engine Control Unit ».

De plus, l'utilisation de ces régimes d'urgence *OEI* pendant les durées préconisées s'accompagne d'opérations de maintenance prédéfinies. En effet, même si l'utilisation de ces régimes d'urgence *OEI* est prévue dans la conception de ces moteurs, les puissances développées sont nettement supérieures à la puissance maximale continue *PMC.* Par suite, une maintenance doit être effectuée suite à l'utilisation de ces régimes d'urgence *OEI* afin de contrôler notamment l'état de ce moteur et de ces composants. En outre, l'utilisation de ces régimes d'urgence *OEI* pendant des durées supérieures aux durées préconisées peut engendrer des dégradations dans le moteur nécessitant alors des opérations de maintenance plus importantes.

Par suite, l'utilisation de ces régimes d'urgence *OEI* qui s'accompagne donc d'opérations de maintenance plus ou moins importantes a un coût direct de maintenance qui peut être élevé.

Ce coût direct de maintenance, désigné également par l'acronyme *DMC* pour la désignation en langue anglaise « Direct Maintenance Cost » prend en compte tous les coûts liés à l'utilisation et au fonctionnement de ce moteur. Ce coût direct de maintenance est donc un élément important dans le coût de fonctionnement d'un aéronef à voilure tournante.

Par ailleurs, pour un moteur, ce coût direct de maintenance dépend également du taux d'utilisation du moteur. Un moteur utilisé à 50% de sa puissance maximale continue *PMC* a par exemple un coût direct de maintenance inférieur à un moteur utilisé à 100% de cette puissance maximale continue *PMC*. Cette différence sur le coût direct de maintenance dépend notamment de la sollicitation des composants du moteur et plus particulièrement des éléments tournants qui s'usent plus rapidement lorsque le moteur est utilisé à une puissance élevée, la fréquence des opérations de maintenance étant également plus importante.

En outre, un moteur peut également subir des détériorations au cours de sa durée de vie impactant ses caractéristiques. Ce moteur continue cependant de fournir une puissance qui peut alors être réduite.

Une détérioration que peut subir un moteur d'aéronef à voilure tournante est par exemple l'apparition de défauts sur au moins un composant de ce moteur ou bien l'ingestion d'un objet étranger par ce moteur. Une telle ingestion d'un objet étranger est désignée par l'acronyme *FOD* désignant en langue anglaise « Foreign Object Damage ».

Ces détériorations, bien qu'elles n'aboutissent pas à une perte totale de puissance mécanique fournie par ce moteur, dégradent son fonctionnement et limitent la puissance mécanique fournie. Par exemple, ce moteur peut fournir de façon continue une puissance égale à la puissance maximale continue *PMC,* mais ne peut plus atteindre de façon temporaire une puissance d'urgence *OEI* supérieure ou égale à la puissance mécanique d'urgence minimale garantie $POEI_{MINI}$.

Une maintenance de ce moteur est alors à prévoir afin de réparer les détériorations de ce moteur et de permettre à ce moteur de fournir de nouveau des puissances d'urgence *OEI* supérieures ou égales à la puissance mécanique d'urgence minimale garantie $POEI_{MINI}$. De fait, ces détériorations, et plus particulièrement les opérations de maintenance qui les corrigent, augmentent le coût direct de maintenance de ce moteur.

Cependant, le moteur peut être utilisé malgré ces détériorations et avec cette baisse de la puissance disponible au niveau de ce moteur. L'enveloppe de vol de l'aéronef à voilure tournante peut alors être réduite pour prendre en compte cette baisse de la puissance disponible au niveau de ce moteur, tout en garantissant la sécurité du vol. De même, la masse totale de l'aéronef à voilure tournante est généralement réduite pour prendre en compte cette baisse de la puissance disponible au niveau de ce moteur, cette réduction de la masse totale de l'aéronef étant obtenue en réduisant la charge utile transportée par cet aéronef.

Enfin, un moteur subit également une perte de puissance consécutivement à son vieillissement. En effet, au long de la durée de vie du moteur et de son utilisation, l'ensemble de ces composants s'usent et peuvent éventuellement se déformer suite aux contraintes thermiques subies. De fait, à partir d'un certain niveau de vieillissement, ce moteur ne peut pas fournir de façon temporaire une puissance d'urgence *OEI* supérieure ou égale à la puissance mécanique d'urgence minimale garantie $POEI_{MINI}$ pour laquelle il a été dimensionné.

Les opérations de maintenance exécutées sur ce moteur durant toute sa vie permettent de l'entretenir et de remplacer éventuellement certains composants afin de maintenir des caractéristiques de ce moteur à un niveau suffisant. Par suite, ce moteur fonctionne de façon fiable, mais, à partir d'un certain niveau de vieillissement, avec une perte de puissance mécanique d'urgence par rapport à la puissance mécanique d'urgence minimale garantie $POEI_{MINI}$. Ces opérations de maintenance impactent également le coût direct de maintenance de ce moteur.

De plus, l'exécution de ces opérations de maintenance consécutives à de telles détériorations de ce moteur immobilise l'aéronef à voilure tournante, qui n'est alors pas disponible pour effectuer un vol.

En outre, afin de caractériser les effets de ces détériorations et/ou du vieillissement sur un moteur, chaque moteur subit de façon régulière des contrôles de santé moteur, également désigné par l'acronyme *EPC* pour la désignation en langue anglaise « Engine Power Check ». Ces contrôles de santé moteur permettent de surveiller les performances d'un moteur par l'intermédiaire de paramètres de surveillance représentatifs de la dégradation du moteur.

Le contrôle de santé moteur est ainsi effectué en comparant les performances du moteur avec des performances de ce moteur obtenues sur un banc d'essai et déclarées par le motoriste. Le contrôle de santé moteur permet de déterminer une marge d'un ou plusieurs paramètres de surveillance de ce moteur par rapport à une valeur limite de chaque paramètre de surveillance et, par suite, de déterminer les puissances mécaniques disponibles telles que la puissance mécanique maximale continue *PMC* et les puissances d'urgence *OEI*. De plus, on peut déduire, grâce à ces paramètres de surveillance, si le moteur a subi des détériorations et s'il doit subir des opérations de maintenance, notamment afin de pouvoir fournir de nouveau les puissances mécaniques pour lesquelles il est adapté.

Le contrôle de santé moteur permet donc de déterminer d'une part les caractéristiques courantes de ce moteur et d'autre part si ce moteur doit subir une ou plusieurs opérations de maintenance.

Par exemple, si ce moteur est un turbomoteur pourvu d'une turbine haute pression disposée en amont d'une turbine libre, un paramètre de surveillance peut être la température des gaz à l'entrée de la turbine libre. Un autre paramètre de surveillance relatif à la puissance délivrée par le turbomoteur peut être la vitesse de rotation du générateur de gaz du turbomoteur sensiblement proportionnelle à la puissance ou bien au couple délivré par le turbomoteur.

En outre, les paramètres de surveillance pouvant dépendre de différents critères tels que le régime de rotation du moteur utilisé, les conditions de stabilisation du moteur ou encore des conditions atmosphériques, chaque contrôle de santé moteur doit être réalisé selon une procédure prédéterminée.

Ce contrôle de santé moteur peut être effectué en cours de vol ou bien entre deux vols. De plus, ce contrôle de santé moteur est effectué de façon régulière, par exemple toutes les vingt heures de fonctionnement du moteur.

La présente divulgation a alors pour objet de proposer une installation motrice destinée à un aéronef à voilure tournante permettant de réduire le coût direct de maintenance de chaque moteur de cette installation motrice et de limiter l'immobilisation de l'aéronef qu'elle équipe, sans limitation sur les performances de l'installation motrice et, par suite, sur les performances de l'aéronef.

Selon la présente divulgation, une installation motrice destinée à un aéronef à voilure tournante comprend au moins deux moteurs principaux, au moins un moteur secondaire et une boîte de transmission principale de puissance. Les moteurs principaux et secondaires entrainent mécaniquement la boîte de transmission principale de puissance afin de mettre en rotation au moins un arbre principal de sortie de la boîte de transmission principale de puissance, cet arbre principal de sortie étant apte à être solidarisé en rotation avec un rotor principal de l'aéronef.

Chaque moteur principal délivre de façon continue une première puissance mécanique principale inférieure ou égale à une puissance mécanique principale maximale continue $PMC_P$ et de façon temporaire une seconde puissance mécanique principale d'urgence supérieure ou égale à une puissance mécanique principale d'urgence minimale garantie $POEI_{MINI}$.

Chaque moteur secondaire délivre de façon continue une puissance mécanique secondaire inférieure ou égale à une puissance mécanique secondaire maximale continue $PMC_S$.

Cette installation est remarquable en ce que chaque moteur secondaire peut fournir deux niveaux de puissance mécanique secondaire distincts au cours d'un vol de l'aéronef. La puissance mécanique secondaire fournie par chaque moteur secondaire permet ainsi que chaque moteur principal et chaque moteur secondaire fournissent conjointement une puissance mécanique suffisante afin d'assurer le vol de l'aéronef via le rotor principal et, par suite, de maintenir les performances de vol de l'aéronef inchangées.

Les deux niveaux de puissance mécanique secondaire sont une première puissance mécanique secondaire $PM_{S1}$ et une seconde puissance mécanique secondaire $PM_{S2}$. La seconde puissance mécanique secondaire $PM_{S2}$ est supérieure à la première puissance mécanique secondaire $PM_{S1}$ et telle que

$$PM_{S2} = PM_{S1} + K.P_{d\acute{e}t},$$

$K$ étant un coefficient supérieur ou égal à la valeur zéro, $P_{d\acute{e}t}$ étant une valeur d'une puissance mécanique principale prédéterminée et « . » étant la fonction multiplication. La seconde puissance mécanique secondaire $PM_{S2}$ permet ainsi de compenser une perte de puissance mécanique principale d'au moins un moteur principal.

Le coefficient $K$ peut être désigné par l'acronyme *RVF* désignant en langue anglaise « Rating Variation Factor » correspondant à un « coefficient de variation de butée de puissance ».

En effet, l'ensemble des moteurs principaux peut fournir, lorsque chaque moteur principal fonctionne correctement, une puissance mécanique suffisante pour assurer le vol de l'aéronef en toute sécurité. A contrario, lorsqu'un moteur principal a subi une ou plusieurs détériorations, la puissance mécanique principale qu'il fournit peut être réduite ou bien limitée, une perte de puissance mécanique principale plus ou moins importante pouvant être consécutive à chaque détérioration comme évoqué précédemment. De même, le vieillissement d'un moteur principal s'accompagne d'une perte de puissance mécanique principale plus ou moins importante.

Par suite, à partir d'un certain niveau de perte de puissance mécanique principale, un premier moteur principal ne peut pas fournir de façon temporaire une seconde puissance mécanique principale d'urgence supérieure ou égale à la puissance mécanique principale d'urgence minimale garantie $POEI_{MINI}$. Par suite, en cas de panne d'un second moteur principal de l'installation motrice, ce premier moteur principal ne peut pas fournir une seconde puissance mécanique principale d'urgence *OEI* suffisante pour compenser la panne de ce second moteur principal.

De fait, l'ensemble des moteurs principaux ne peut plus fournir une puissance mécanique suffisante pour assurer le vol de l'aéronef en toute sécurité.

Chaque moteur principal ayant subi une telle perte de puissance mécanique principale d'urgence significative doit alors subir au moins une opération de maintenance ou bien les performances de l'aéronef utilisant ce moteur principal doivent être réduites afin de permettre la réalisation d'un vol en toute sécurité. La réduction de ces performances de l'aéronef à voilure tournante est essentiellement une réduction de l'enveloppe de vol de l'aéronef et/ou de la masse totale de l'aéronef.

En effet, chaque moteur secondaire de l'installation motrice permet de fournir une seconde puissance mécanique secondaire $PM_{S2}$ compensant la perte de puissance mécanique principale d'urgence de ce premier moteur principal due à des détériorations de ce moteur principal et/ou à son vieillissement. Cette seconde puissance mécanique secondaire compense en effet, au minimum le déficit de puissance mécanique principale d'urgence entre la seconde puissance mécanique principale d'urgence et la puissance mécanique principale d'urgence minimale garantie $POEI_{MINI}$. Ainsi, l'installation motrice peut fournir par l'intermédiaire des moteurs principaux et secondaires une puissance mécanique suffisante afin d'assurer un vol en toute sécurité de l'aéronef à voilure tournante.

Avantageusement, l'installation motrice permet ainsi à l'aéronef dont au moins un premier moteur principal subit une perte de puissance mécanique principale d'urgence et au moins un second moteur principal subit une panne de réaliser des vols sans effectuer ces opérations de maintenance et sans réduire ses performances.

Par suite, l'installation motrice permet d'améliorer la disponibilité de cet aéronef en évitant de réaliser immédiatement ces opérations de maintenance. L'installation motrice permet également de réduire le coût de maintenance directe de cet aéronef.

La panne d'un moteur principal peut être détectée par l'intermédiaire d'une unité de contrôle *ECU* coopérant avec ce moteur principal. Un calculateur moteur connu sous l'acronyme *FADEC* pour la désignation en langue anglaise « Full Authority Digital Engine Control » peut remplacer cette unité de contrôle *ECU.*

**[0056]** - La seconde puissance mécanique secondaire $PM_{S2}$ d'un moteur secondaire est selon la formule

$$PM_{S2} = PM_{S1} + K.P_{d\acute{e}t},$$

dans laquelle $PM_{S1}$ est une première puissance mécanique secondaire de ce moteur secondaire, $K$ est un coefficient supérieur ou égal à la valeur zéro, $P_{d\acute{e}t}$ est une valeur d'une puissance mécanique principale prédéterminée et « . » est la fonction multiplication.

Chaque moteur secondaire peut ainsi fournir deux niveaux de puissance mécanique secondaire distincts au cours d'un vol de l'aéronef, d'une part une première puissance mécanique secondaire $PM_{S1}$ et d'autre part une seconde puissance mécanique secondaire $PM_{S2}$. La seconde puissance mécanique secondaire $PM_{S2}$ est supérieure à la première puissance mécanique secondaire $PM_{S1}$ lorsque le coefficient $K$ est strictement positif afin de compenser une perte de la seconde puissance mécanique principale d'urgence d'un moteur principal.

De fait, le moteur secondaire est utilisé au juste besoin par l'adaptation des puissances mécaniques secondaires $PM_{S1}$, $PM_{S2}$ et voit ainsi ses opérations de maintenance réduites.

En outre, la seconde puissance secondaire $PM_{S2}$ est limitée par la puissance mécanique secondaire maximale continue $PMC_S$. De fait, le moteur secondaire ne peut fournir une seconde puissance secondaire $PM_{S2}$ supérieure à cette puissance mécanique secondaire maximale continue $PMC_S$ sans risque de détérioration, et le coefficient $K$ est par conséquent limité également.

Par contre, la première puissance mécanique secondaire $PM_{S1}$ est une puissance prédéfinie afin que chaque moteur secondaire soit plus réactif au moment de délivrer la seconde puissance mécanique secondaire $PM_{S2}$. Cette première puissance mécanique secondaire $PM_{S1}$ est de préférence une puissance constante.

Cette première puissance mécanique secondaire $PM_{S1}$ peut cependant être nulle, chaque moteur secondaire nécessitant alors, pour atteindre cette seconde puissance mécanique secondaire $PM_{S2}$, un temps plus important que si cette première puissance mécanique secondaire $PM_{S1}$ était non nulle.

Avantageusement, bien que la première puissance mécanique secondaire $PM_{S1}$ soit non nulle, le moteur secondaire peut être amené à ne fournir aucune puissance secondaire dans certaines phases de vol particulières de l'aéronef, lorsque les moteurs principaux ne sont pas sollicités de façon importante.

En effet, cette première puissance mécanique secondaire $PM_{S1}$ est non nulle pour permettre au moteur secondaire d'être réactif en cas de panne moteur et afin de fournir la seconde puissance secondaire $PM_{S2}$ rapidement. C'est notamment le cas dans les phases de vol de décollage, d'atterrissage, de vol stationnaire ou encore lors d'un virage sous forte charges aérodynamiques ou d'une augmentation rapide d'altitude, au cours desquelles les moteurs principaux sont fortement sollicités et le temps de réaction doit être faible.

Par contre, dans le cas d'un vol de croisière par exemple, les moteurs principaux sont moins sollicités. De fait, si une panne d'un moteur principal intervient, le temps de réaction peut être plus important pour que chaque moteur principal encore fonctionnel fournisse sa seconde puissance mécanique principale d'urgence *OEI* et pour que chaque moteur secondaire fournisse la seconde puissance mécanique secondaire $PM_{S2}$. Par suite, on peut arrêter ou mettre chaque moteur secondaire au ralenti lors de telles phases de vol sans remettre en cause la sécurité du vol de l'aéronef.

La seconde puissance mécanique secondaire $PM_{S2}$ ayant pour but de compenser une perte de la seconde puissance mécanique principale d'urgence d'un moteur principal par rapport à la puissance mécanique principale d'urgence minimale garantie $POEI_{MINI}$ de ce moteur principal, il est intéressant que cette seconde puissance mécanique secondaire $PM_{S2}$ soit déterminée notamment en fonction de cette puissance mécanique principale d'urgence minimale garantie $POEI_{MINI}$. Ainsi, dans le cas général d'une installation motrice comportant plusieurs moteurs principaux, la puissance mécanique principale prédéterminée $P_{dét}$ est la somme de la puissance mécanique principale d'urgence minimale garantie $POEI_{MINI}$ de chaque moteur principal sauf un. En effet, il est statistiquement peu probable d'avoir deux moteurs principaux en panne simultanément, on peut donc considérer le cas d'une panne d'un seul moteur principal.

Ce coefficient *K* peut être déterminé par un moyen de calcul présent dans l'aéronef, et plus particulièrement dans l'installation motrice. Ce moyen de calcul est de préférence dédié à l'installation motrice, on peut alors parler d'unité de gestion de l'installation motrice ou encore « Power Management Unit » en langue anglaise. De même, la seconde puissance mécanique secondaire $PM_{S2}$ peut également être déterminée par ce moyen de calcul.

Cependant, ce coefficient *K* et la seconde puissance mécanique secondaire $PM_{S2}$ peuvent être déterminés par le calculateur moteur *FADEC* du moteur secondaire dans le cas particulier où l'installation motrice comporte un seul moteur secondaire, les calculateurs moteur *FADEC* de chaque moteur de l'installation motrice communiquant par ailleurs entre eux.

Avantageusement, dans le cas particulier d'une installation motrice comportant deux moteurs principaux identiques, la puissance mécanique principale prédéterminée $P_{dét}$ est la puissance mécanique principale d'urgence minimale garantie $POEI_{MINI}$ d'un moteur principal.

Cependant, la puissance mécanique principale prédéterminée $P_{dét}$ peut être fonction d'une autre puissance mécanique principale caractéristique d'un moteur principal, telle que sa puissance mécanique principale maximale continue $PMC_P$ ou bien sa puissance mécanique principale maximale de décollage $PMD_P$. La puissance mécanique principale prédéterminée $P_{dét}$ est par exemple un pourcentage de la puissance mécanique principale maximale continue $PMC_P$ d'un moteur principal, tel que $P_{dét}$ = 120% de $PMC_P$ dans le cas particulier d'une installation motrice comportant deux moteurs principaux identiques.

De même, la puissance mécanique principale prédéterminée $P_{dét}$ peut être un pourcentage de la puissance mécanique principale maximale de décollage $PMD_P$ d'un moteur principal, tel que $P_{dét}$ = 110% de $PMD_P$ dans le cas particulier d'une installation motrice comportant deux moteurs principaux identiques.

La seconde puissance mécanique secondaire $PM_{S2}$, compensant une perte de la seconde puissance mécanique principale d'urgence d'un moteur principal par rapport à la puissance mécanique principale d'urgence minimale garantie $POEI_{MINI}$ de ce moteur principal, est inférieure à la puissance mécanique principale maximale continue $PMC_P$ de chaque moteur principal. De fait, chaque moteur secondaire peut donc être de dimensions inférieures à chaque moteur principal et la puissance mécanique secondaire maximale continue $PMC_S$ fournie par chaque moteur secondaire est inférieure à la puissance mécanique principale maximale continue $PMC_P$ de chaque moteur principal.

Avantageusement, l'utilisation de moteurs secondaires de dimensions inférieures à chaque moteur principal permet de limiter l'augmentation de la masse de l'installation motrice et, par suite, de la masse de l'aéronef

Par exemple, la puissance mécanique secondaire maximale continue $PMC_S$ fournie par chaque moteur secondaire est de l'ordre de 30% de la puissance mécanique principale maximale continue $PMC_P$ d'un moteur principal. Suivant cet exemple, la première puissance mécanique secondaire $PM_{S1}$ peut être égale à 10% de cette puissance mécanique principale maximale continue $PMC_P$ et la seconde puissance mécanique secondaire $PM_{S2}$ est alors comprise entre 10% et 30% de cette puissance mécanique principale maximale continue $PMC_P$.

De même, les première et seconde puissances mécaniques secondaire $PM_{S1}$, $PM_{S2}$ peuvent correspondre à une limitation de puissance de ce moteur secondaire. De telles limitations constituent en fait des butées de puissance de ce moteur secondaire au même titre que les puissances d'urgence $OEI$ associées à chaque régime d'urgence $OEI$ 30sec, $OEI$ 2mn et $OEI$ continu des moteurs principaux, ces butées étant généralement prédéterminées.

De préférence, l'installation motrice comporte plusieurs moteurs principaux qui peuvent être identiques et un seul moteur secondaire. Avantageusement, l'utilisation d'un seul moteur secondaire, qui peut de plus être de dimensions inférieures à chaque moteur principal, limite l'effet sur la masse de l'installation motrice et, par suite, sur la masse de l'aéronef.

L'installation motrice selon la présente divulgation étant destinée à un aéronef à voilure tournante, chaque moteur principal peut être un turbomoteur et chaque moteur secondaire peut être un moteur thermique, par exemple un turbomoteur, ou bien un moteur électrique.

Dans un mode préféré, l'installation motrice comporte deux moteurs principaux identiques et un seul moteur secondaire, la puissance mécanique secondaire maximale continue $PMC_S$ fournie par le moteur secondaire étant inférieure à la puissance mécanique principale maximale continue $PMC_P$ de chaque moteur principal.

L'état de fonctionnement de chaque moteur principal peut être déterminé par un contrôle de santé moteur qui doit être réalisé régulièrement. Chaque contrôle de santé moteur permet de déterminer le niveau de détérioration et/ou de vieillissement de chaque moteur principal ainsi qu'une marge de puissance mécanique principale de chaque moteur principal.

Le coefficient $K$, permettant de déterminer la valeur de la seconde puissance secondaire $PM_{S2}$ est de préférence déterminé à partir de cette marge de puissance mécanique principale. Cette marge de puissance est par exemple positive lorsque le moteur principal peut fournir une puissance disponible supérieure ou égale à une puissance de référence et négative lorsque le moteur principal ne peut pas fournir une puissance disponible supérieure ou égale à une puissance de référence. Cette marge de puissance peut être exprimée en pourcentage.

Le coefficient $K$ est de préférence selon la formule

$$K = |\min[0, CSM_{P11}, CSM_{P12}]|,$$

$CSM_{P11}$, $CSM_{P12}$ représentant respectivement la marge de puissance de chaque moteur principal, « 0 » représentant la valeur zéro, « $min$ » représentant une fonction donnant comme résultat la valeur minimum d'une série de valeurs et « | | » étant la fonction valeur absolue.

En outre, la seconde puissance secondaire $PM_{S2}$ étant limitée par la puissance mécanique secondaire maximale continue $PMC_S$, le coefficient $K$ est également limité. Par exemple, le coefficient $K$ doit rester inférieur à une valeur de 0.2. En fait, le coefficient $K$ lorsqu'il est différent de zéro correspond à la marge de puissance d'un moteur principal qui est négative, ce moteur principal ayant un déficit de puissance mécanique principale d'urgence. Si la valeur absolue de cette marge de puissance négative et, par suite, le coefficient $K$ sont trop importants, cela signifie que la perte de puissance mécanique principale d'urgence de ce moteur principal est importante et ne peut alors pas être compensée par le moteur secondaire. Dans ce cas, l'aéronef équipé de ce moteur principal doit être immobilisé pour maintenance ou bien voler avec une réduction de son enveloppe de vol et/ou de sa masse totale.

De plus, la marge de puissance d'un moteur principal peut être une marge vis-à-vis de la puissance mécanique principale d'urgence minimale garantie $POEI_{MINI}$ de ce moteur principal selon la formule

$$CSM = \frac{POEI_{Dispo} - POEI_{MINI}}{POEI_{MINI}},$$

$POEI_{MINI}$ représentant la puissance mécanique principale d'urgence minimale garantie de ce moteur principal et $POEI_{Dispo}$ représentant une puissance mécanique principale d'urgence $OEI$ disponible de ce moteur principal. Cette puissance mécanique principale d'urgence disponible $POEI_{Dispo}$ de ce moteur principal correspond à la seconde puissance mécanique principale d'urgence que peut réellement fournir ce moteur principal dans son état actuel.

Lorsque ce moteur principal peut fournir une puissance mécanique principale d'urgence disponible $POEI_{Dispo}$ supérieure ou égale à sa puissance mécanique principale d'urgence minimale garantie $POEI_{MINI}$, la marge $CSM$ de puissance est positive. Par suite, le coefficient $K$ est égal à zéro et la seconde puissance mécanique secondaire $PM_{S2}$ est égale à la première puissance mécanique secondaire $PM_{S1}$. Chaque moteur secondaire n'a donc pas besoin de délivrer la seconde puissance mécanique secondaire $PM_{S2}$, chaque moteur principal pouvant délivrer une seconde puissance mécanique principale d'urgence $OEI$ suffisante en cas de panne d'un des moteurs principaux.

Par contre, lorsqu'un moteur principal ne peut fournir qu'une puissance mécanique principale d'urgence disponible $POEI_{Dispo}$ inférieure à sa puissance mécanique principale d'urgence minimale garantie $POEI_{MINI}$, la marge $CSM$ de puissance est négative. Par suite, le coefficient $K$ est égal à la valeur absolue de la plus petite marge $CSM$ de puissance de ces moteurs principaux. Chaque moteur secondaire a alors besoin de délivrer la seconde puissance mécanique secondaire $PM_{S2}$ afin de compenser la perte de puissance mécanique principale d'urgence d'au moins un moteur principal en cas de panne d'un des moteurs principaux.

Chaque contrôle de santé moteur permettant de déterminer la marge $CSM$ de puissance et, par suite, la seconde puissance mécanique secondaire $PM_{S2}$, cette seconde puissance mécanique secondaire $PM_{S2}$ est constante entre deux contrôles de santé moteur de chaque moteur principal.

En outre, dans le cas d'une installation motrice comportant deux ou plusieurs moteurs principaux, la puissance mécanique principale prédéterminée $P_{dét}$ est attachée au moteur principal dont le déficit de puissance mécanique principale d'urgence est le plus important. Ce déficit de puissance mécanique principale d'urgence est le produit de la marge $CSM$ de puissance du moteur principal considéré par la puissance mécanique principale d'urgence minimale garantie $POEI_{MINI}$ de ce moteur principal considéré, c'est-à-dire $CSM \times POEI_{MINI}$.

Dans le cas particulier d'une installation motrice comportant des moteurs principaux identiques, la puissance mécanique principale prédéterminée $P_{dét}$ est attachée au moteur principal dont la marge $CSM_{P11}$, $CSM_{P12}$ de puissance mécanique principale est la plus faible.

Selon une première variante, la seconde puissance mécanique secondaire $PM_{S2}$ de chaque moteur secondaire peut être une puissance mécanique secondaire d'urgence. Dans ce cas, chaque moteur secondaire peut disposer d'une puissance mécanique secondaire d'urgence supérieure à sa puissance mécanique maximale continue $PMC_S$. Cependant, cette puissance mécanique secondaire d'urgence s'accompagne d'opérations de maintenance sur ce moteur secondaire de manière analogue à l'utilisation d'une puissance d'urgence $OEI$ sur les moteurs principaux et impacte alors le coût direct de maintenance de l'installation motrice. Il peut toutefois être intéressant d'utiliser une puissance mécanique secondaire d'urgence sur un moteur secondaire pour par exemple compenser la perte de puissance principale d'urgence d'un moteur principal. En effet, les opérations de maintenance consécutives à l'utilisation d'une puissance d'urgence sur ce moteur secondaire entraînent une augmentation de son coût direct de maintenance, qui peut être inférieur au coût d'immobilisation de l'aéronef.

Selon une seconde variante, la délivrance de la seconde puissance mécanique secondaire $PM_{S2}$ de chaque moteur secondaire peut être commandée par un opérateur, tel le pilote de l'aéronef, indépendamment d'un contrôle de santé de chaque moteur principal. Ainsi, cet opérateur peut, en cas de besoin, bénéficier d'un apport de puissance mécanique au niveau de l'installation motrice pour permettre de garantir la sécurité du vol de l'aéronef. Par exemple, une baisse de la puissance mécanique principale d'au moins un moteur principal peut être détectée entre deux contrôles de santé moteur. Selon un autre exemple, le pilote de l'aéronef peut avoir besoin temporairement d'une puissance supplémentaire au niveau de l'installation motrice pour bénéficier d'une marge de sécurité plus importante dans le cas de manoeuvres particulières nécessitant un surcroit de puissance, telles qu'un décollage ou bien vol stationnaire à masse maximum de l'aéronef ou bien afin d'augmenter son enveloppe de vol. L'opérateur peut commander la délivrance de la seconde puissance mécanique secondaire $PM_{S2}$ de chaque moteur secondaire par l'intermédiaire d'un moyen de commande dédié et choisir également la valeur de cette seconde puissance mécanique secondaire $PM_{S2}$.

La présente divulgation concerne aussi un aéronef à voilure tournante comportant au moins un rotor principal et une installation motrice précédemment décrite. L'installation motrice entraine en rotation, via la boîte de transmission principale de puissance, le rotor principal qui est solidaire en rotation d'un arbre principal de sortie de la boite de transmission principale de puissance de l'installation motrice. De plus, l'aéronef peut comporter un rotor arrière ou bien au moins une hélice de propulsion. Ce rotor arrière ou bien chaque hélice de propulsion peut également être entrainé en rotation par cette boîte de transmission principale de puissance par l'intermédiaire d'un arbre secondaire de sortie et d'une boîte de transmission auxiliaire de puissance.

La présente invention a pour objet un procédé de gestion d'une installation motrice destinée à un aéronef à voilure tournante, l'installation motrice comprenant au moins deux moteurs principaux, au moins un moteur secondaire et une boîte de transmission principale de puissance. Les moteurs principaux et secondaires entraînent mécaniquement la boîte de transmission principale de puissance afin de mettre en rotation au moins un arbre principal de sortie de la boîte de transmission principale de puissance, l'arbre principal de sortie étant solidaire en rotation d'un rotor principal de l'aéronef.

Chaque moteur principal délivre de façon continue une première puissance mécanique principale inférieure ou égale à une puissance mécanique principale maximale continue $PMC_P$ et de façon temporaire une seconde puissance mécanique principale d'urgence supérieure ou égale à une puissance mécanique principale d'urgence minimale garantie $POEI_{MINI}$. Chaque moteur secondaire délivre de façon continue une puissance mécanique secondaire inférieure ou égale à une puissance mécanique secondaire maximale continue $PMC_S$.

Au cours de ce procédé de gestion de l'installation motrice,

- on commande chaque moteur principal pour fournir une puissance mécanique principale, et
- on commande chaque moteur secondaire pour fournir deux niveaux de puissance mécanique distincts, la puissance mécanique secondaire fournie par chaque moteur secondaire permettant que chaque moteur principal et chaque moteur secondaire fournissent conjointement une puissance mécanique supérieure ou égale à une puissance mécanique suffisante afin d'assurer le vol de l'aéronef via le rotor principal, les deux niveaux de puissance mécanique secondaire étant une première puissance mécanique secondaire $PM_{S1}$ et une seconde puissance mécanique secondaire $PM_{S2}$, la seconde puissance mécanique secondaire $PM_{S2}$ étant supérieure à la première puissance mécanique secondaire $PM_{S1}$ et telle que

$$PM_{S2} = PM_{S1} + K.P_{dét},$$

$K$ étant un coefficient supérieur ou égal à la valeur zéro, $P_{dét}$ étant une valeur d'une puissance mécanique principale prédéterminée et « . » étant la fonction multiplication, la seconde puissance mécanique secondaire $PM_{S2}$ permettant ainsi de compenser une perte de puissance mécanique principale d'au moins un moteur principal.

Chaque moteur principal peut être commandé par l'intermédiaire d'une unité de contrôle *ECU* coopérant avec ce moteur principal. De même, chaque moteur secondaire peut être commandé par une unité de contrôle *ECU* coopérant avec ce moteur secondaire. Un calculateur moteur *FADEC* peut remplacer cette unité de contrôle *ECU*.

Ainsi, des opérations de maintenance de chaque moteur principal peuvent être évitées et, par suite, le coût direct de maintenance de chaque moteur principal est réduit. De plus, chaque moteur secondaire compensant les pertes de puissance mécanique principale d'urgence de chaque moteur principal, les performances de vol de cet aéronef sont maintenues inchangées. De même, la disponibilité de l'aéronef est améliorée, l'installation motrice selon l'invention permettant de reporter les opérations de maintenance sans dégradation des performances de vol de l'aéronef.

La puissance mécanique principale prédéterminée $P_{dét}$ est de préférence la puissance mécanique principale d'urgence minimale garantie $POEI_{MINI}$ d'un moteur principal.

La puissance mécanique principale prédéterminée $P_{dét}$ peut également être fonction d'une autre puissance principale caractéristique d'un moteur principal, telle que sa puissance mécanique principale maximale continue $PMC_P$ ou bien sa puissance mécanique principale maximale de décollage $PMD_P$.

De plus, au cours de ce procédé de gestion de l'installation motrice,

- on effectue un contrôle de santé moteur de chaque moteur principal déterminant un niveau de détérioration de chaque moteur principal et une marge $CSM_{P11}$, $CSM_{P12}$ de puissance mécanique principale de chaque moteur principal, et
- on détermine le coefficient $K$ telle que

$$K = |min[0, CSM_{P11}, CSM_{P12}]|,$$

CSMP11,CSMP12 étant respectivement la marge de puissance mécanique principale de chaque moteur principal, « 0 » étant la valeur zéro, « min » étant une fonction donnant comme résultat la valeur minimum d'une série de valeurs, « | | » étant la fonction valeur absolue.

L'état de fonctionnement de chaque moteur principal est ainsi déterminé par un contrôle de santé moteur qui est réalisé régulièrement. Chaque contrôle de santé moteur permet de déterminer le niveau de détérioration et/ou de vieillissement de chaque moteur principal et la marge $CSM_{P11}$, $CSM_{P12}$ de puissance de chaque moteur principal. Chaque moteur secondaire compense ensuite les pertes de puissance mécanique principale d'urgence de chaque moteur principal.

Cette marge $CSM_{P11}$, $CSM_{P12}$ de puissance d'un moteur principal peut être une marge vis-à-vis de la puissance mécanique principale d'urgence minimale garantie $POEI_{MINI}$ de ce moteur principal selon la formule

$$CSM = \frac{POEI_{Dispo} - POEI_{MINI}}{POEI_{MINI}},$$

$POEI_{MINI}$ représentant la puissance mécanique principale d'urgence minimale garantie de ce moteur principal et $POEI_{Dispo}$ représentant une puissance mécanique principale d'urgence *OEI* disponible de ce moteur principal. Cette puissance mécanique principale d'urgence disponible $POEI_{Dispo}$ de ce moteur principal correspond à la seconde puissance mécanique principale d'urgence que peut réellement fournir ce moteur principal dans son état actuel.

Enfin, au cours de ce procédé de gestion de l'installation motrice,

- on commande chaque moteur secondaire afin que ladite puissance mécanique secondaire soit nulle lorsque ledit aéronef est en vol de croisière.

L'invention et ses avantages apparaîtront avec plus de détails dans le cadre de la description qui suit avec des exemples de réalisations donnés à titre illustratif en référence aux figures annexées qui représentent :

- la figure 1, un aéronef à voilure tournante équipé d'une installation motrice, et

- la figure 2, un schéma représentant des courbes des puissances fournies par les moteurs de l'installation motrice.

Les éléments présents dans plusieurs figures distinctes sont affectés d'une seule et même référence.

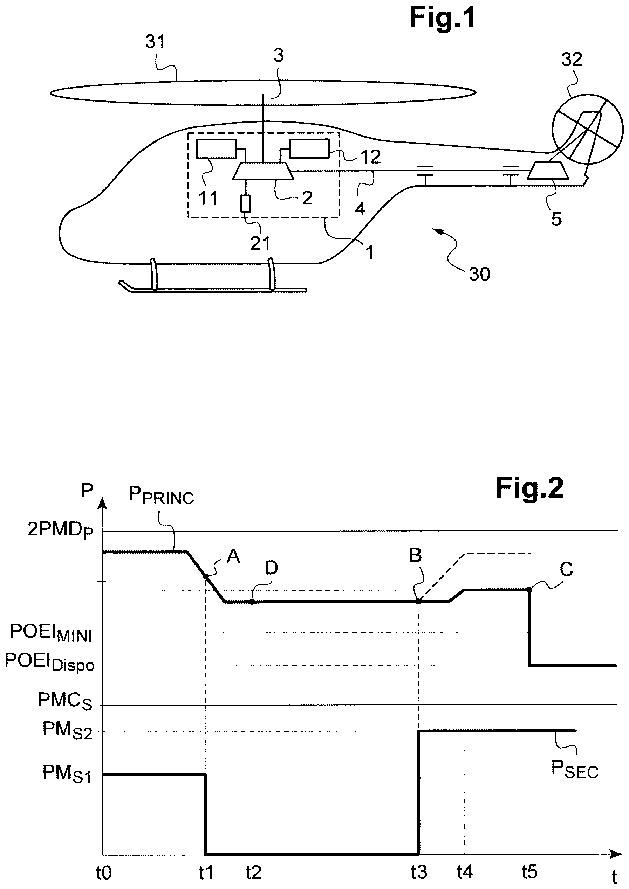

La figure 1 représente un aéronef 30 à voilure tournante comportant un rotor principal 31, un rotor arrière 32 et une installation motrice 1. L'installation motrice 1 comporte deux moteurs principaux 11,12 identiques, un moteur secondaire 21 et une boîte de transmission principale de puissance 2. Les moteurs principaux 11,12 et le moteur secondaire 21 peuvent entraîner conjointement la boîte de transmission principale de puissance 2 afin de mettre en rotation un arbre principal de sortie 3 de cette boîte de transmission principale de puissance 2. Cet arbre principal de sortie 3 est solidaire en rotation avec le rotor principal 31 afin d'assurer la sustentation et la propulsion de l'aéronef 30.

Le rotor arrière 32 peut également être entrainé en rotation par la boite de transmission principale de puissance 2 par l'intermédiaire d'un arbre secondaire de sortie 4 de cette boîte de transmission principale de puissance 2 et d'une boîte de transmission auxiliaire de puissance 5.

Les moteurs principaux 11,12 sont par exemple des turbomoteurs comportant un générateur de gaz et une turbine libre entraînant la boîte de transmission principale de puissance 2. Le moteur secondaire 21 peut être un turbomoteur ou bien un moteur électrique. De plus, le moteur secondaire 21 est de dimensions inférieures à chaque moteur principal 11,12.

Chaque moteur principal 11,12 délivre de façon continue une première puissance mécanique principale inférieure ou égale à une puissance mécanique principale maximale continue $PMC_P$ et de façon temporaire une seconde puissance mécanique principale d'urgence supérieure ou égale à une puissance mécanique principale d'urgence minimale garantie $POEI_{MINI}$. Chaque moteur secondaire 21 délivre de façon continue une puissance mécanique secondaire inférieure ou égale à une puissance mécanique secondaire maximale continue $PMC_S$. Le moteur secondaire 21 est de dimensions inférieures à chaque moteur principal 11,12 et la puissance mécanique secondaire maximale continue $PMC_S$ est inférieure à la puissance mécanique principale maximale continue $PMC_P$.

Le moteur secondaire 21 peut fournir deux niveaux de puissance mécanique secondaire distincts, une première puissance mécanique secondaire $PM_{S1}$ et une seconde puissance mécanique secondaire $PM_{S2}$, la seconde puissance mécanique secondaire $PM_{S2}$ étant supérieure à la première puissance mécanique secondaire $PM_{S1}$.

Lorsque les deux moteurs principaux 11,12 fonctionnent normalement c'est-à-dire de façon que chaque moteur principal 11,12 peut délivrer en fonctionnement continu une première puissance mécanique principale égale à la puissance mécanique principale maximale continue $PMC_P$ et de façon temporaire une seconde puissance mécanique principale d'urgence supérieure ou égale à la puissance mécanique principale d'urgence minimale garantie $POEI_{MINI}$, les moteurs principaux 11,12 permettent d'assurer seuls le vol de l'aéronef 30 en toute sécurité, et notamment en cas de panne d'un moteur principal.

Par contre, lorsqu'un moteur principal 11,12 ne peut pas délivrer une seconde puissance mécanique principale d'urgence supérieure ou égale à la puissance mécanique principale d'urgence minimale garantie $POEI_{MINI}$, le moteur secondaire 21 délivre une seconde puissance mécanique secondaire $PM_{S2}$. Les deux moteurs principaux 11,12 et le moteur secondaire 21 délivrent ainsi conjointement une puissance mécanique suffisante afin d'assurer le vol de l'aéronef 30 en toute sécurité suite à la panne d'un moteur principal. La seconde puissance mécanique secondaire $PM_{S2}$ compense ainsi la perte de la puissance mécanique principale d'un moteur principal 11,12 vis-à-vis de sa puissance mécanique principale d'urgence minimale garantie $POEI_{MINI}$.

De la sorte, l'utilisation du moteur secondaire 21 permet de maintenir les performances de vol de l'aéronef 30 inchangées bien que un des deux moteurs principaux 11,12 ne puisse pas délivrer une seconde puissance mécanique principale supérieure ou égale à la puissance mécanique principale d'urgence minimale garantie $POEI_{MINI}$.

Un moteur principal 11,12 peut subir une perte de puissance mécanique principale d'urgence consécutivement à une ou plusieurs détériorations subies par ce moteur principal 11,12 ou bien suite au vieillissement de ce moteur principal 11,12.

De telles détériorations peuvent être par exemple l'apparition de défauts sur au moins un composant de ce moteur principal 11,12 ou bien l'ingestion d'un objet étranger par ce moteur principal 11,12. Ces détériorations, bien qu'elles n'aboutissent pas à une perte totale de puissance mécanique fournie par ce moteur principal 11,12, dégradent son fonctionnement et limitent la puissance mécanique qu'il peut fournir. Une maintenance de ce moteur principal 11,12 est alors à prévoir afin de réparer ces détériorations de ce moteur et permettre à ce moteur de fournir de nouveau une seconde puissance mécanique principale d'urgence supérieure ou égale à la puissance mécanique principale d'urgence minimale garantie $POEI_{MINI}$. De fait, ces détériorations, et plus particulièrement les opérations de maintenance qui les corrigent, augmentent le coût direct de maintenance de ce moteur principal 11,12. De plus, ces opérations de maintenance immobilisent cet aéronef 30 au sol ou bien les vols de cet aéronef 30 sont effectués avec une réduction de son enveloppe de vol ou bien de sa masse totale.

Avantageusement, le moteur secondaire 21 de l'installation motrice 1 peut délivrer la seconde puissance mécanique secondaire $PM_{S2}$ pour compenser cette perte de puissance mécanique principale d'urgence d'un moteur principal 11,12 et permettre ainsi à l'aéronef 30 de poursuivre son vol en sécurité. De la sorte, le coût de maintenance direct de ces moteurs principaux 11,12 et, par suite, de l'aéronef 30 peut être réduit grâce à l'utilisation du moteur secondaire 21, les opérations de maintenance des moteurs principaux 11,12 pouvant ne pas être réalisées, les performances de vol de l'aéronef 30 n'étant pas dégradées. De plus, l'aéronef 30 reste ainsi disponible pour réaliser des vols sans dégradation de ses performances.

Une telle perte de la puissance mécanique principale délivrée par un moteur principal 11,12 est généralement mise en évidence lors d'un contrôle de santé moteur, qui doit être réalisé régulièrement sur chaque moteur principal 11,12. Ce contrôle de santé moteur vérifie l'état de fonctionnement de chaque moteur principal 11,12 et permet de déterminer une marge *CSM* de puissance mécanique principale de chaque moteur principal 11,12.

Suite à un tel contrôle de santé moteur de chaque moteur principal 11,12 et la mise en évidence d'une perte de la puissance mécanique principale délivrée par au moins un moteur principal 11,12, chaque moteur principal 11,12 peut être amené à subir des opérations de maintenance.

La marge de puissance mécanique principale d'un moteur principal 11,12 peut être selon la formule

$$CSM = \frac{POEI_{Dispo} - POEI_{MINI}}{POEI_{MINI}},$$

*POEI_{MINI}* représentant la puissance mécanique principale d'urgence minimale garantie *POEI_{MINI}* de ce moteur principal et *POEI_{Dispo}* représentant une puissance mécanique principale d'urgence *OEI* disponible de ce moteur principal correspond à la puissance que peut réellement fournir ce moteur principal 11,12 dans son état actuel. Cette marge de puissance *CSM* est donc positive lorsque le moteur principal 11,12 dispose d'une puissance mécanique principale d'urgence disponible *POEI_{Dispo}* supérieure ou égale à sa puissance mécanique principale d'urgence minimale garantie de ce moteur principal *POEI_{MINI}*, et négative dans le cas contraire.

Cette marge *CSM_{P11}*, *CSM_{P12}* de puissance d'un moteur principal 11,12 permet ensuite de déterminer la seconde puissance mécanique secondaire *PM_{S2}* selon la formule

$$PM_{S2} = PM_{S1} + K.P_{dét},$$

dans laquelle *PM_{S1}* est une première puissance mécanique secondaire prédéfinie de ce moteur secondaire, *K* est un coefficient supérieur ou égal à la valeur zéro, *P_{dét}* est une valeur d'une puissance mécanique principale prédéterminée.

Le coefficient *K* est selon la formule

$$K = |min[0, CSM_{P11}, CSM_{P12}]|,$$

*CSM_{P11}, CSM_{P12}* représentant respectivement la marge de puissance mécanique principale de chaque moteur principal 11,12, « *min* » représentant une fonction donnant comme résultat la valeur minimum d'une série de valeurs. De fait, le coefficient *K* est égale à zéro lorsque les deux moteurs principaux 11,12 disposent d'une puissance mécanique principale d'urgence disponible *POEI_{Dispo}* supérieure ou égale à sa puissance mécanique principale d'urgence minimale garantie *POEI_{MINI}* et il est positif lorsqu'au moins un moteur principal 11,12 dispose d'une puissance mécanique principale d'urgence disponible *POEI_{Dispo}* inférieure à sa puissance mécanique principale d'urgence minimale garantie *POEI_{MINI}*.

Le schéma de la figure 2 représente en fonction du temps les niveaux de puissance mécanique secondaire du moteur secondaire 21 ainsi que la puissance mécanique principale fournie conjointement par les deux moteurs principaux 11,12.

La courbe *P_{PRINC}* représente la puissance mécanique principale fournie conjointement par les deux moteurs principaux 11,12 et la courbe *P_{SEC}* la puissance mécanique secondaire fournie par le moteur secondaire 21.

Sur la figure 2 est également représentée la puissance mécanique maximale de décollage 2. *PMD_P* qui peut être fournie conjointement par les deux moteurs principaux 11,12 et égale au double de la puissance mécanique principale maximale de décollage *PMD_P* de chaque moteur principal 11,12 ainsi que la puissance mécanique secondaire maximale continue *PMC_S* que peut délivrer le moteur secondaire 21.

Le premier intervalle de temps [t_0,t_1] correspond par exemple à une phase de décollage et une prise d'altitude de l'aéronef 30 jusqu'à un point *A* correspondant à une entrée en phase de vol de croisière. La courbe *P_{SEC}* représente une première puissance mécanique secondaire *PM_{S1}* qui est constante. La courbe *P_{PRINC}* représente la puissance mécanique principale fournie conjointement par les deux moteurs principaux 11,12 pendant la phase de décollage. La somme de ces deux puissances *P_{PRINC}* et *P_{SEC}* permet ainsi à l'aéronef d'effectuer en sécurité cette phase de décollage.

Le moteur secondaire 21 fournit une première puissance mécanique secondaire *PM_{S1}* car le dernier contrôle de santé moteur effectué n'avait détecté aucune perte de puissance principale d'urgence sur les moteurs principaux 11,12, la marge *CSM_{P11}*, *CSM_{P12}* de puissance chaque moteur principal 11,12 étant positive.

Le second intervalle de temps [t_1,t_3] correspond par exemple à une phase de vol de croisière du point *A* au point *B*. Cette phase de vol de croisière nécessite moins de puissance mécanique au niveau de l'installation motrice 1. De fait, la puissance mécanique principale $P_{PRINC}$ fournie conjointement par les deux moteurs principaux 11,12 peut être réduite. De plus, le moteur secondaire 21 peut être arrêté ou mis au ralenti ne fournissant aucune puissance mécanique secondaire.

Au cours de cette phase de vol de croisière, un contrôle de santé moteur est effectué au temps $t_2$ correspondant au point $D$ sur la courbe $P_{PRINC}$. Ce contrôle de santé moteur a mis en évidence une marge $CSM_{P11}$, $CSM_{P12}$ de puissance négative. Le moteur secondaire 21 doit donc fournir une seconde puissance secondaire $PM_{S2}$ afin de compenser la perte de puissance mécanique principale d'urgence correspondante en cas de panne d'un moteur principal 11,12.

Cependant, l'aéronef 30 étant toujours en phase de vol de croisière, le moteur secondaire 21 reste arrêté ou bien au ralenti, ne fournissant aucune puissance mécanique secondaire. En effet, si une panne sur un moteur principal 11,12 apparaît au cours de cette phase de vol de croisière, le moteur secondaire 21 dispose d'un temps de réaction suffisamment important pour atteindre la seconde puissance secondaire $PM_{S2}$, sans remettre en cause la sécurité du vol.

Ensuite, l'aéronef 30 quitte la phase de vol de croisière au point $B$ (temps $t_3$) pour entrer dans une phase de vol plus exigeante en termes de puissance, telle une phase d'atterrissage ou bien de vol stationnaire. Le moteur secondaire 21 fournit alors la seconde puissance secondaire $PM_{S2}$ conformément au dernier contrôle de santé moteur effectué. Avantageusement, les deux moteurs principaux 11,12 étant fonctionnels peuvent fournir une puissance réduite prenant en compte l'augmentation de la puissance secondaire fournie par le moteur secondaire 21 par rapport à la phase de décollage.

A partir du point $B$, la courbe $P_{PRINC}$ en pointillé représente la puissance mécanique principale que fourniraient les deux moteurs principaux 11,12 si le moteur secondaire 21 fournissait la première puissance mécanique secondaire $PM_{S1}$. La courbe $P_{PRINC}$ en trait continu représente quant à elle la puissance mécanique principale que fournissent les deux moteurs principaux 11,12 lorsque le moteur secondaire 21 fournit la seconde puissance mécanique secondaire $PM_{S2}$. Cette puissance mécanique principale $P_{PRINC}$ est ainsi réduite, ce qui permet de moins solliciter les moteurs principaux 11,12 et, par suite, de réduire légèrement leur coût direct de maintenance. Il peut être en effet plus intéressant de solliciter le moteur secondaire 21 qui est de dimensions réduites et qui peut avoir un coût direct de maintenance plus faible.

Ensuite, au point $C$ (temps $t_5$), une panne d'un moteur principal 11,12 intervient. Un seul moteur principal 11,12 fournit alors une puissance mécanique principale, qui est une puissance mécanique principale d'urgence $OEI$. Cette puissance mécanique principale d'urgence $OEI$ est de plus inférieure à sa puissance mécanique principale d'urgence minimale garantie $POEI_{MINI}$.

Avantageusement, le moteur secondaire 21 qui fournit déjà la seconde puissance mécanique secondaire $PM_{S2}$ compense ce déficit de puissance mécanique principale d'urgence $OEI$ garantissant un vol en sécurité.

De plus, ce moteur secondaire 21 continue de fournir cette seconde puissance mécanique secondaire $PM_{S2}$ jusqu'au prochain contrôle de santé moteur ou bien jusqu'à la prochaine opération de maintenance de ce moteur principal 11,12.

L'installation motrice 1 selon la présente divulgation permet ainsi de maintenir inchangées les performances de l'installation motrice 1 et, par suite, les performances de vol de cet aéronef 30, tout en réduisant les opérations de maintenance de chaque moteur principal 11,12.

Par suite, le coût direct de maintenance de chaque moteur principal 11,12 peut être réduit sans limitation sur les performances de l'installation motrice 1 et, par suite, sur les performances de l'aéronef 30.

Avantageusement, le moteur secondaire 21 est utilisé au juste besoin, par l'adaptation des puissances mécaniques secondaires $PM_{S1}$, $PM_{S2}$ et voit donc son coût de maintenance réduit au minimum.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

**Revendications**

1. Procédé de gestion d'une installation motrice (1) destinée à un aéronef à voilure tournante (30), ladite installation motrice (1) comprenant au moins deux moteurs principaux (11,12), au moins un moteur secondaire (21) et une boîte de transmission principale de puissance (2), lesdits moteurs principaux (11,12) et secondaire (21) entraînant mécaniquement ladite boîte de transmission principale de puissance (2) afin de mettre en rotation au moins un arbre principal de sortie (3) de ladite boîte de transmission principale de puissance (2), ledit arbre principal de sortie (3) étant solidaire en rotation d'un rotor principal (31) dudit aéronef (30), chaque moteur principal (11,12) délivrant de façon continue une première puissance mécanique principale inférieure ou égale à une puissance mécanique principale maximale continue $PMC_P$ et de façon temporaire une seconde puissance mécanique principale d'urgence supérieure ou égale à une puissance mécanique principale d'urgence minimale garantie $POEI_{MINI}$, chaque moteur secondaire (21) délivrant de façon continue une puissance mécanique secondaire inférieure ou égale à une puissance mécanique secondaire maximale continue $PMC_S$, **caractérisé en ce que**

- l'on effectue un contrôle de santé moteur de chaque moteur principal (11,21) déterminant un niveau de détérioration de chaque moteur principal (11,12) et une marge $CSM_{P11}$, $CSM_{P12}$ de puissance mécanique principale de chaque moteur principal (11,12),

- on détermine un coefficient $K$ supérieur ou égal à la valeur zéro tel que $K = |min[0, CSM_{P11}, CSM_{P12}]|$, $CSM_{P11}$, $CSM_{P12}$ étant respectivement ladite marge de puissance mécanique principale de chaque moteur principal (11,12), « 0 » étant la valeur zéro, « min » étant une fonction donnant comme résultat la valeur minimum d'une série de valeurs, « | | » étant la fonction valeur absolue,

- on commande chaque moteur principal (11,12) pour fournir une puissance mécanique principale, et

- on commande chaque moteur secondaire (21) pour fournir deux niveaux de puissance mécanique distincts, ladite puissance mécanique secondaire fournie par chaque moteur secondaire (21) permettant que chaque moteur principal (11,12) et chaque moteur secondaire (21) fournissent conjointement une puissance mécanique supérieure ou égale à une puissance mécanique suffisante $PMS$ afin d'assurer le vol dudit aéronef (30) via ledit rotor principal (31), lesdits deux niveaux de puissance mécanique secondaire étant une première puissance mécanique secondaire $PM_{S1}$ et une seconde puissance mécanique secondaire $PM_{S2}$, ladite seconde puissance mécanique secondaire $PM_{S2}$ étant supérieure à ladite première puissance mécanique secondaire $PM_{S1}$ et telle que $PM_{S2}$ = $PM_{S1}$ + $K.P_{dét}$, $P_{dét}$ étant une valeur d'une puissance mécanique principale prédéterminée et « . » étant la fonction multiplication, ladite seconde puissance mécanique secondaire $PM_{S2}$ permettant ainsi de compenser une perte de puissance mécanique principale d'au moins un moteur principal (11,21).

2.  Procédé de gestion d'une installation motrice (1) selon la revendication 1,
    **caractérisé en ce que** ladite puissance mécanique secondaire maximale continue $PMC_S$ fournie par chaque moteur secondaire (21) est inférieure à ladite puissance mécanique principale maximale continue $PMC_P$ de chaque moteur principal (11,12).

3.  Procédé de gestion d'une installation motrice (1) selon l'une quelconque des revendications 1 à 2,
    **caractérisé en ce que** ladite marge $CSM_{P11}$, $CSM_{P12}$ de puissance mécanique principale d'un moteur principal (11,12) est une marge vis-à-vis de ladite puissance mécanique principale d'urgence minimale garantie $POEI_{MINI}$ de chaque moteur principal (11,12) telle que

$$CSM_{P11} = \frac{POEI_{Dispo}-POEI_{MINI}}{POEI_{MINI}}, \quad POEI_{MINI}$$

étant ladite puissance mécanique principale d'urgence minimale garantie dudit moteur principal (11,12), $POEI_{Dispo}$ étant une puissance mécanique principale d'urgence disponible dudit moteur principal (11,12).

4.  Procédé de gestion d'une installation motrice (1) selon l'une quelconque des revendications 1 à 3, **caractérisé en ce que** ladite puissance mécanique principale prédéterminée $P_{dét}$ est ladite puissance mécanique principale d'urgence minimale garantie $POEI_{MINI}$ d'un moteur principal (11,12).

5.  Procédé de gestion d'une installation motrice (1) selon l'une quelconque des revendications 1 à 3, **caractérisée en ce que** ladite puissance mécanique principale prédéterminée $P_{dét}$ est un pourcentage de ladite puissance mécanique principale maximale continue $PMC_P$ d'un moteur principal (11,12).

6.  Procédé de gestion d'une installation motrice (1) selon l'une quelconque des revendications 1 à 3, **caractérisé en ce que** chaque moteur principal (11,12) disposant d'une puissance mécanique principale maximale de décollage $PMD_P$, ladite puissance mécanique principale prédéterminée $P_{dét}$ est un pourcentage de ladite puissance mécanique principale maximale de décollage $PMD_P$ d'un moteur principal (11,12).

7.  Procédé de gestion d'une installation motrice (1) selon l'une quelconque des revendications 1 à 6, **caractérisé en ce que** ladite puissance mécanique principale prédéterminée $P_{dét}$ est attachée audit moteur principal (11,12) dont ladite marge $CSM_{P11}$, $CSM_{P12}$ de puissance mécanique principale est la plus faible.

8.  Procédé de gestion d'une installation motrice (1) selon l'une quelconque des revendications 1 à 7, **caractérisé en ce que** la délivrance de ladite seconde puissance mécanique secondaire $PM_{S2}$ de chaque moteur secondaire (21) peut être commandée par un opérateur.

9.  Procédé de gestion d'une installation motrice (1) selon l'une quelconque des revendications 1 à 8, **caractérisé en ce que** ladite seconde puissance mécanique secondaire $PM_{S2}$ de chaque moteur secondaire (21) peut être une puissance mécanique secondaire d'urgence.

10. Procédé de gestion d'une installation motrice (1) selon l'une quelconque des revendications 1 à 9, **caractérisé en ce que** ladite seconde puissance mécanique secondaire $PM_{S2}$ est constante entre deux contrôles de santé moteur de chaque moteur principal (11,12).

11. Procédé de gestion d'une installation motrice (1) selon l'une quelconque des revendications 1 à 9, **caractérisé en ce que** ladite première puissance mécanique secondaire $PM_{S1}$ est constante.

12. Procédé de gestion d'une installation motrice (1) selon l'une quelconque des revendications 1 à 11, **caractérisé en ce que** lesdites première et seconde puissances mécaniques secondaire $PM_{S1}$, $PM_{S2}$ sont des limitations de puissance de chaque moteur secondaire (21).

13. Procédé de régulation d'une installation motrice (1) selon l'une quelconque des revendications 1 à 12, **caractérisé en ce que** l'on commande chaque moteur secondaire (21) afin que ladite puissance mécanique secondaire soit nulle lorsque ledit aéronef (30) est en vol de croisière.

14. Procédé de gestion d'une installation motrice (1) selon l'une quelconque des revendications 1 à 13, **caractérisé en ce que** ladite installation motrice (1) comporte deux moteurs principaux (11,12) identiques et un seul moteur secondaire (21).

## Patentansprüche

1. Verfahren zur Führung einer Antriebseinrichtung (1) für ein Drehflügel-Luftfahrzeug (30), wobei die Antriebseinrichtung (1) mindestens zwei Hauptmotoren (11, 12), mindestens einen Nebenmotor (21) und ein Hauptleistungsgetriebe (2) aufweist, wobei die Hauptmotoren (11, 12) und Nebenmotoren (21) mechanisch das Haupt-leistungsgetriebe (2) antreiben, um mindestens eine Hauptaus-gangswelle (3) des Leistungsgetriebes (2) zu drehen, wobei die Hauptausgangswelle (3) drehfest mit einem Hauptrotor (31) des Luftfahrzeugs (30) verbunden ist, wobei jeder Hauptmotor (11, 12) kontinuierlich eine erste mechanische Hauptleistung liefert, die kleiner oder gleich einer maximalen kontinuierlichen mechanischen Hauptleistung $PMC_P$ ist, und jeder Hauptmotor (11, 12) zeitweise eine zweite mechanische Nothauptleistung liefert, die größer oder gleich einer minimalen garantierten mechanischen Hauptleistung $POEI_{MINI}$ ist, wobei jeder Nebenmotor (21) kontinuierlich eine mechanische Nebenleistung liefert, die kleiner oder gleich einer maximalen kontinuierlichen mechanischen Nebenleistung $PMC_S$ ist, **dadurch gekennzeichnet, dass**

- eine Kontrolle der Betriebstauglichkeit des Motors für jeden Hauptmotor (11, 12) ausgeführt wird, wobei ein Maß der Verschlechterung eines jeden Hauptmotors (11, 12) und eine Spanne $CSM_{P11}$, $CSM_{P12}$ der mechanischen Hauptleistung eines jeden Hauptmotors (11, 12) bestimmt werden,

- ein Koeffizient $K$ bestimmt wird, der größer oder gleich dem Wert 0 ist, derart, dass $K = |min[0, CSM_{P11}, CSM_{P12}]|$, wobei $CSM_{P11}$, $CSM_{P12}$ jeweils die Spanne der mechanischen Hauptleistung eines jeden Hauptmotors (11, 12) ist, "0" die Zahl Null ist, "$min$" eine Funktion ist, die als Ergebnis den minimalen Wert einer Reihe von Werten liefert, $||$ die Absolutbetragsfunktion ist,

- jeder Hauptmotor (11, 12) gesteuert wird, um eine mechanische Hauptleistung zu liefern, und

- jeder Nebenmotor (21) gesteuert wird, um zwei unterschiedliche Größen mechanischer Leistung zu liefern, wobei die von jedem Nebenmotor gelieferte mechanische Nebenleistung es ermöglicht, dass jeder Hauptmotor (11, 12) und jeder Nebenmotor (21) gemeinsam eine mechanische Leistung liefern, die größer oder gleich einer ausreichenden mechanischen Leistung $PMS$ ist, um den Flug des Luftfahrzeugs (30) mittels des Hauptrotors (31) sicherzustellen, wobei die beiden Größen der mechanischen Nebenleistung eine erste mechanische Nebenleistung $PM_{S1}$ und eine zweite mechanische Nebenleistung $PM_{S2}$ sind, wobei die zweite mechanische Nebenleistung $PM_{S2}$ größer als die erste mechanischen Nebenleistung $PM_{S1}$ ist, und derart, dass $PM_{S2} = PM_{S1} + K.P_{dét}$ gilt, wobei $P_{dét}$ ein vorbestimmter Wert einer mechanischen Hauptleistung ist, und "." die Multiplikationsfunktion ist, wobei die zweite mechanische Nebenleistung $PM_{S2}$ es somit ermöglicht, einen Verlust von mechanischer Hauptleistung mindestens eines Hauptmotors (11, 12) auszugleichen.

2. Verfahren zur Führung einer Antriebseinrichtung (1) nach Anspruch 1, **dadurch gekennzeichnet, dass** die von jedem Nebenmotor (21) gelieferte maximale kontinuierliche mechanische Nebenleistung $PMC_S$ kleiner ist als die maximale kontinuierliche mechanische Hauptleistung $PMC_P$ eines jeden Hauptmotors (11, 12).

3. Verfahren zur Führung einer Antriebseinrichtung (1) nach einem der Ansprüche 1 bis 2, **dadurch gekennzeichnet, dass** die Spanne $CSM_{P11}$, $CSM_{P12}$ der mechanischen Hauptleistung eines Hauptmotors (11, 12) eine Spanne gegenüber der minimalen garantierten mechanischen Hauptnotleistung $POEI_{MINI}$ eines jeden Hauptmotors (11, 12) ist, derart, dass

$$CSM_{P11} = \frac{POEI_{Dispo} - POEI_{MINI}}{POEI_{MINI}} ,$$

wobei $POEI_{MINI}$ die garantierte minimale mechanische Hauptnotleistung des Hauptmotors (11, 12) ist, wobei $POEI_{Dispo}$ eine verfügbare mechanische Hauptnotleistung des Hauptmotors (11, 12) ist.

4. Verfahren zur Führung einer Antriebseinrichtung (1) nach einem der Ansprüche 1 bis 3, **dadurch gekennzeichnet, dass** die vorbestimmte mechanische Hauptleistung $P_{dét}$ die garantierte minimale mechanische Hauptnotleistung $POEI_{MINI}$ eines Hauptmotors (11, 12) ist.

5. Verfahren zur Führung einer Antriebseinrichtung (1) nach einem der Ansprüche 1 bis 3, **dadurch gekennzeichnet, dass** die vorbestimmte mechanische Hauptleistung $P_{dét}$ ein Prozentanteil der maximalen kontinuierlichen mechanischen Hauptleistung $PMC_P$ eines Hauptmotors (11, 12) ist.

6. Verfahren zur Führung einer Antriebseinrichtung (1) nach einem der Ansprüche 1 bis 3, **dadurch gekennzeichnet, dass** jeder Hauptmotor (11, 12) über eine maximale mechanische Hauptstartabflugsleistung $PMD_P$ verfügt, wobei die vorbestimmte mechanische Hauptleistung $P_{dét}$ ein Prozentanteil der maximalen mechanischen Hauptstartabflugsleistung $PMD_P$ eines Hauptmotors (11, 12) ist.

7. Verfahren zur Führung einer Antriebseinrichtung (1) nach einem der Ansprüche 1 bis 6, **dadurch gekennzeichnet, dass** die vorbestimmte mechanische Hauptleistung $P_{dét}$ mit dem Hauptmotor (11, 12) verknüpft ist, dessen Spanne $CSM_{P11}$, $CSM_{P12}$ der mechanischen Hauptleistung am kleinsten ist.

8. Verfahren zur Führung einer Antriebseinrichtung (1) nach einem der Ansprüche 1 bis 7, **dadurch gekennzeichnet, dass** die Lieferung der zweiten mechanischen Nebenleistung $PM_{S2}$ eines jeden Nebenmotors (21) von einer Bedienungsperson gesteuert werden kann.

9. Verfahren zur Führung einer Antriebseinrichtung (1) nach einem der Ansprüche 1 bis 8, **dadurch gekennzeichnet, dass** die zweite mechanische Nebenleistung $PM_{S2}$ eines jeden Nebenmotors (21) eine mechanische Notnebenleistung sein kann.

10. Verfahren zur Führung einer Antriebseinrichtung (1) nach einem der Ansprüche 1 bis 9, **dadurch gekennzeichnet, dass** die zweite mechanische Nebenleistung $PM_{S2}$ zwischen zwei Kontrollen der Betriebstüchtigkeit eines jeden Hauptmotors (11, 12) konstant ist.

11. Verfahren zur Führung einer Antriebseinrichtung (1) nach einem der Ansprüche 1 bis 9, **dadurch gekennzeichnet, dass** die erste mechanische Nebenleistung $PM_{S1}$ konstant ist.

12. Verfahren zur Führung einer Antriebseinrichtung (1) nach einem der Ansprüche 1 bis 11, **dadurch gekennzeichnet, dass** die erste und die zweite mechanische Nebenleistung $PM_{S1}$, $PM_{S2}$ Leistungsbegrenzungen eines jeden Nebenmotors (21) sind.

13. Verfahren zur Regelung einer Antriebseinrichtung (1) nach einem der Ansprüche 1 bis 12, **dadurch gekennzeichnet, dass** jeder Nebenmotor (21) so gesteuert wird, dass die mechanische Nebenleistung gleich Null ist, während sich das Luftfahrzeug (30) in einem Reiseflug befindet.

14. Verfahren zur Führung einer Antriebseinrichtung (1) nach einem der Ansprüche 1 bis 13, **dadurch gekennzeichnet, dass** die Antriebseinrichtung (1) zwei identische Hauptmotoren (11, 12) und einen einzelnen Nebenmotor (21) aufweist.

**Claims**

1. A method for managing a power plant (1) intended for a rotary-wing aircraft (30), said power plant (1) comprising at least two main engines (11, 12), at least one secondary engine (21) and a main power transmission gearbox (2), said main (11, 12) and secondary (21) engines mechanically driving said main power transmission gearbox (2) in order to cause at least one main output shaft (3) of said main power transmission gearbox (2) to rotate, said main output shaft (3) being integral in rotation with a main rotor (31) of said aircraft (30), each main engine (11, 12) continuously delivering a first main mechanical power which is less than or equal to a maximum continuous main mechanical power $PMC_P$ and temporarily delivering a contingency second main mechanical power which is greater than or equal to a guaranteed minimum contingency main mechanical power $POEI_{MINI}$, each secondary engine (21) continuously delivering a secondary mechanical power which is less than or equal to a maximum continuous secondary mechanical power $PMC_S$, **characterised in that**

- an engine health check is carried out on each main engine (11, 21) to determine a level of deterioration of each main engine (11, 12) and a main mechanical power margin $CSM_{P11}$, $CSM_{P12}$ of each main engine (11, 12),
- a coefficient $K$ is determined which is greater than or equal to the value zero such that $K = |min[0, CSM_{P11}, CSM_{P12}]|$, $CSM_{P11}$, $CSM_{P12}$ being respectively said main mechanical power margin of each main engine (11, 12), "0" being the value zero, "$min$" being a function which gives as a result the minimum value of a series of values, and "||" being the absolute value function,
- each main engine (11, 12) is controlled to provide a main mechanical power, and
- each secondary engine (21) is controlled to provide two separate mechanical power levels, said secondary mechanical power provided by each secondary engine (21) enabling each main engine (11, 12) and each secondary engine (21) jointly to supply a mechanical power which is greater than or equal to a sufficient mechanical power $PMS$ in order to enable flying of said aircraft (30) using said main rotor (31), said two secondary mechanical power levels being a first secondary mechanical power $PM_{S1}$ and a second secondary mechanical power $PM_{S2}$, said second secondary mechanical power $PM_{S2}$ being greater than said first secondary mechanical power $PM_{S1}$ and such that $PM_{S2} = PM_{S1} + K.P_{det}$, $P_{det}$ being a value of a predetermined main mechanical power and " . " being the multiplication function, said second secondary mechanical power $PM_{S2}$ thus making it possible to compensate for a loss of main mechanical power from at least one main engine (11, 21).

2. A method for managing a power plant (1) according to Claim 1,
**characterised in that** said maximum continuous secondary mechanical power $PMC_S$ supplied by each secondary engine (21) is less than said maximum continuous main mechanical power $PMC_P$ of each main engine (11, 12).

3. A method for managing a power plant (1) according to any one of Claims 1 to 2,
**characterised in that** said main mechanical power margin $CSM_{P11}$, $CSM_{P12}$ of a main engine (11, 12) is a margin with respect to said guaranteed minimum contingency main mechanical power $POEI_{MINI}$ of each main engine (11, 12), such that

$$CSM_{P11} = \frac{POEI_{Dispo} - POEI_{MINI}}{POEI_{MINI}}$$

$POEI_{MINI}$ being said guaranteed minimum contingency main mechanical power of said main engine (11, 12), $POEI_{Dispo}$ being an available contingency main mechanical power of said main engine (11, 12).

4. A method for managing a power plant (1) according to any one of Claims 1 to 3,
**characterised in that** said predetermined main mechanical power $P_{det}$ is said guaranteed minimum contingency main mechanical power $POEI_{MINI}$ of a main engine (11, 12).

5. A method for managing a power plant (1) according to any one of Claims 1 to 3,
**characterised in that** said predetermined main mechanical power $P_{det}$ is a percentage of said maximum continuous main mechanical power $PMC_P$ of a main engine (11, 12).

6. A method for managing a power plant (1) according to any one of Claims 1 to 3,
**characterised in that**, each main engine (11, 12) having available a maximum takeoff main mechanical power $PMD_P$, said predetermined main mechanical power $P_{det}$ is a percentage of said maximum takeoff main mechanical power $PMD_P$ of a main engine (11, 12).

7. A method for managing a power plant (1) according to any one of Claims 1 to 6,
**characterised in that** said predetermined main mechanical power $P_{det}$ is associated with said main engine (11, 12) having the smallest said main mechanical power margin $CSM_{P11}$, $CSM_{P12}$.

8. A method for managing a power plant (1) according to any one of Claims 1 to 7,
**characterised in that** the delivery of said second secondary mechanical power $PM_{S2}$ of each secondary engine (21) can be controlled by an operator.

9. A method for managing a power plant (1) according to any one of Claims 1 to 8,
**characterised in that** said second secondary mechanical power $PM_{S2}$ of each secondary engine (21) can be a contingency secondary mechanical power.

10. A method for managing a power plant (1) according to any one of Claims 1 to 9,
**characterised in that** said second secondary mechanical power $PM_{S2}$ is constant between two engine health checks of each main engine (11, 12).

11. A method for managing a power plant (1) according to any one of Claims 1 to 9, **characterised in that** said first secondary mechanical power $PM_{S1}$ is constant.

12. A method for managing a power plant (1) according to any one of Claims 1 to 11,
**characterised in that** said first and second secondary mechanical powers $PM_{S1}, PM_{S2}$ are power limits of each secondary engine (21).

13. A method for regulating a power plant (1) according to any one of Claims 1 to 12,
**characterised in that** each secondary engine (21) is controlled so that said secondary mechanical power is zero when said aircraft (30) is in cruising flight.

14. A method for managing a power plant (1) according to any one of Claims 1 to 13,
**characterised in that** said power plant (1) comprises two identical main engines (11, 12) and a single secondary engine (21).

# Fig.1

# Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4177693 A
- US 3963372 A
- WO 2012059671 A
- US 20090186320 A
- EP 2724939 A
- EP 2623746 A
- EP 2623747 A
- EP 2623748 A